# EUROPÄISCHE PATENTSCHRIFT

(11) **EP 0 432 621 B1**
(45) Veröffentlichungstag und Bekanntmachung des Hinweises auf die Patenterteilung: **23.03.1994**
(21) Anmeldenummer: 90123285.0
(22) Anmeldetag: 05.12.1990
(51) Int. Cl.: B23G 5/20

(54) **Gewinde-Zirkularfräser**
Thread milling cutter
Fraise à couper des filetages

(30) Priorität: 13.12.1989 DE 3941104
(43) Veröffentlichungstag der Anmeldung: 19.06.1991
(73) Patentinhaber: Ernst Reime GmbH & Co. KG Spezialfabrik für Präzisionsgewindeschneidwerkzeuge, D-90489 Nürnberg (DE)
(72) Erfinder: Fischer, Gerhard, D-8501 Rosstal (DE)
(74) Vertreter: Tergau, Enno, Dipl.-Ing.

(56) Entgegenhaltungen:
- EP-A- 0 355 678
- DE-A- 1 627 402

## Beschreibung

Die Erfindung betrifft einen Fräser mit den Merkmalen des Oberbegriffs des Anspruches 1. Ein derartiges Gewindefräswerkzeug ist bekannt aus DE-C1-38 10 884 (dort Anspruch 17 ff.).

Der Erfindung liegt die Aufgabe zugrunde, die Arbeitsgeschwindigkeit eines derartigen Fräsers zu erhöhen. Diese Aufgabe wird an einem Fräser zum Zirkularfräsen durch die Merkmale gemäß Patentanspruch 1 gelöst.

Der Erfindungsgegenstand wird anhand von in den Figuren dargestellten Ausführungsbeispielen beschrieben. Es zeigen:

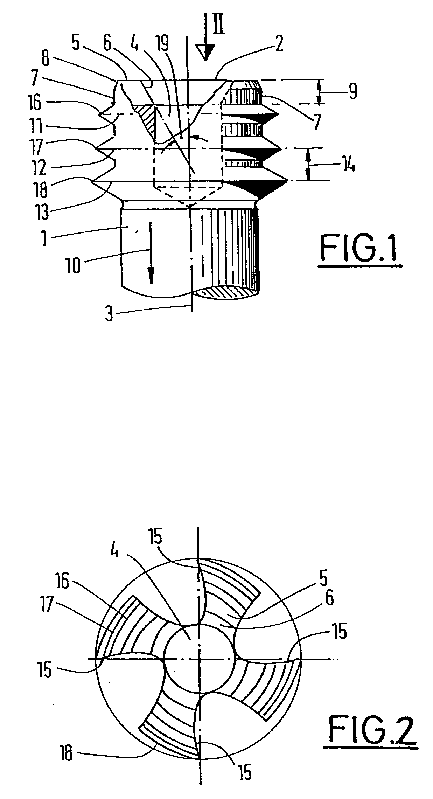

- Fig. 1: eine schematische Seitenansicht eines derartigen Fräsers.
- Fig. 2: in Draufsicht entsprechend Pfeil II eine Ansicht des Fräsers gemäß Fig. 1.

Der Schaft 1 des Fräsers ist ausgehend von seinem Stirnende 2 mit einer zentralen, zur Fräserachse 3 konzentrischen Aussparung 4 versehen. Um die Aussparung 4 herum sind die die Kernbohrung am Werkstück erzeugenden Stirnschneiden 5 herumgruppiert. Die Stirnschneiden 5 sind zur Aussparung 4 hin flankiert von den inneren Flankenschneiden 6, die in einem spitzen, sich zum Fräserschaft 1 hin schließenden Winkel zur Fräserachse 3 bzw. zu einer die Fräserachse 3 enthaltenden Ebene verlaufen.

Die rechtwinklig zur Fräserachse 3 bzw. zu einer die Fräserachse 3 enthaltenden Ebene verlaufenden Stirnschneiden 5 sind im Übergangsbereich zur Umfangsfläche, nämlich zu den Schaftschneiden 7 bzw. zum Schaftfräsbereich 9 mit einem Radius bzw. einer Faskante 8 abgerundet bzw. gebrochen.

Der sich über die Axiallänge der Schaftschneiden 7 erstreckende Schaftfräsbereich 9 ist in Axialrichtung 10 relativ kurz ausgebildet. An den Schaftfräsbereich 9 schließt sich in Axialrichtung 10 eine Mehrzahl von rechtwinklig zur Fräserachse 3 verlaufenden Umfangsebenen 11-13 an. Die Umfangsebenen 11-13 stehen jeweils in einem Axialabstand 14 zueinander, der der Steigung des zu fräsenden Gewindes entspricht. In jeder Umfangsebene 11-13 sind vier Umfangsschneiden 15 gleichmäßig über den Umfang verteilt positioniert, die zur spanenden Erzeugung der Gewindegänge dienen.

Jede Umfangsschneide 15 wird von einem Gewindezahn, nachstehend kurz "Umfangs-Zahn" 16-18 gebildet. Dabei sind die Umfangszähne 16 der Umfangsebene 11, die Umfangszähne 17 der Umfangsebene 12 und die Umfangszähne 18 der Umfangsebene 13 zugeordnet.

Die unterschiedlichen Umfangsebenen 11-13 zugeordneten Umfangszähne 16-18 weisen ein unterschiedliches Zahnprofil auf, während die in derselben Umfangsebene 11-13 liegenden Umfangszähne 16-18 dasselbe Zahnprofil zeigen.

Das Zahnprofil von unterschiedlichen Umfangsebenen 11-13 zugeordneten Umfangsschneiden 15 ist für eine jeweils unterschiedliche Zerspanungsleistung derart ausgelegt, daß die in der stirnschneidenächsten Umfangsebene 11 befindlichen Umfangszähne 16 einen vergleichsweise großen Zerspanungsquerschnitt mit vergleichweise hohem Zerspanungsvolumen als Vorschneidezähne aufweisen. Die in den daran anschließenden Umfangsebenen 12,13 befindlichen Umfangszähne 17,18 hingegen weisen mit zunehmendem Axialabstand (Richtung 10) einen kleineren Zerspanungsquerschnitt mit vergleichsweise kleinerem bzw. kleinerwerdendem Zerspanungsvolumen auf, weil sie mehr als Fertigschneidezähne angewendet werden.

Die stirnschneidennächste Umfangsebene 11 enthält die Vorschneidezähne, während die dem Stirnende 2 am weitesten beabstandete Umfangsebene 13 die Fertigschneidezähne enthält. Die gesamte Zerspanungsleistung von 100% der Gewindeschneidzähne verteilt sich etwa wie folgt auf die Umfangszähne 16,17 und 18 der einzelnen Umfangsebenen 11, 12 und 13 ausgehend von der stirnendennächsten Umfangsebene 11 in Richtung auf die stirnendenfernste Umfangsebene 13: 50%:30%:20%. Unter "Zerspanungsleistung" ist hier praktisch der gesamte Querschnitt der zur reinen Gewindeherstellung abzuspanenden Querschnittsfläche zu verstehen.

Im Gegensatz zum bekannten Fräser ist der Abstand zwischen der zur Gewindefertigformung dienenden stirnendenfernsten Umfangsebene 13 vom Stirnende 2 ausgenutzt zur Unterbringung von Vorschneidezähnen. Dadurch wird nicht etwa die nutzbare Gewindetiefe bei Sacklochgewinden verkleinert. Vielmehr wird dadurch die nutzbare Gewindetiefe praktisch der Sacklochtiefe angepaßt. Bei dieser Aussage ist auch berücksichtigt, daß jede Schraube bis zu ihrem Ende kein volles Schraubengewinde aufweist, sondern dort ebenfalls mit einer Anlauflänge versehen ist.

Zur Gewährleistung eines möglichst weichen Eingriffes der einzelnen Umfangszähne 16-18 verlaufen deren Schneidenspanflächen nicht parallel zur Fräserachse 3, sondern bilden mit dieser oder mit einer sie enthaltenden Ebene einen sich in Axialrichtung 10 zum Schaft 1 hin öffnenden spitzen Winkel von zwischen ca. 15° und 40° derart, daß die anfallenden Späne in Axialrichtung 10, d.h. in Richtung aus dem Gewindeloch heraus abgeführt werden.

Der Freiwinkel der Stirnschneiden 5 beträgt etwa 4° und ist in Axialrichtung 10 wirksam. Der Freiwinkel der Schaftschneiden 7 im Schaftfräsbereich beträgt etwa 8° und ist radial wirksam. Im Bereich der hinterschliffenen Facette im Bereich der Faskante 8, nämlich am Übergang von den Stirnschneiden 5 zu den Schaftschneiden 7 beträgt der radiale Freiwinkel etwa 10°. Der radiale Freiwinkel der Umfangsschneiden 15 in den drei Umfangsebenen 11,12 und 13 der Gewindespanung beträgt übereinstimmend etwa 7°.

Die Umfangszähne 16 und 17 sind im Flankendurchmesser und im Außendurchmesser kleiner als die zur Fertigformung des Gewindes dienenden, eigentlichen Umfangszähne 18.

Durch die erfindungsgemäße Ausgestaltung sind ohne Überlastung der einzelnen Umfangszähne die Schnittgeschwindigkeiten wesentlich höher zu realisieren. Trotz des Arbeitens mit in mehreren Umfangsebenen 11-13 angeordneten Umfangszähnen 16-18 wird bei Sacklochgewinden am Gewindeloch der Bereich nicht verlängert, in dem keine oder nur unvollständige Gewindegänge vorhanden sind. Die als Vorschneidezähne ausgebildeten zusätzlichen Zahnreihen in den stirnendenseitigen Umfangsebenen 11 und 12 ermöglichen im Vergleich zur Ausführung gemäß DE-C1-38 10 884 auch deutlich höhere Vorschübe pro Zahn. Die ursprünglichen Bearbeitungszeiten konnten selbst bei ungünstigen Werkstoffbedingungen um mindestens 50% gesenkt werden, ohne daß dadurch ein erhöhter Verschleiß an den Schneidkanten auftrat.

Weiter werden auch die erzielbaren Gewindeoberflächenqualitäten durch die Aufteilung des anfallenden Spanvolumens auf mehrere hintereinander angeordnete und im Gewindeprofil gestufte Zahnreihen entschieden verbessert.

Die Anzahl der Umfangszähne 16, 17, 18 richtet sich primär nach der vorhandenen Werkzeug-Abmessung. Grundsätzlich ist eine fertigungstechnisch maximal mögliche Zahl von Umfangszähnen 16, 17, 18 von Vorteil. Da beim zirkularen Gewindefräsen auch bei langspanenden Werkstoffen immer kurze Späne entstehen, sind mögliche Verklemmungen auch bei über 1,5 x s hinausgehende Gewindetiefen nicht zu befürchten, wenn der Gewindefräser eine zentrale Schmiermittelzuführung aufweist. Wie die hier durchgeführten Versuchsreihen ergaben, werden alle anfallenden Späne vollständig während des Fräsvorganges mit dem Schmiermittel abgeführt.

### Bezugszeichen

- 1: Schaft
- 2: Stirnende
- 3: Fräserachse
- 4: Aussparung
- 5: Stirnschneide
- 6: inn. Flankenschneide
- 7: Schaftschneide
- 8: Faskante
- 9: Schaftfräsbereich
- 10: Axialrichtung
- 11: Umfangsebene
- 12: Umfangsebene
- 13: Umfangsebene
- 14: Axialabstand
- 15: Umfangsschneide
- 16: Umfangszahn
- 17: Umfangszahn
- 18: Umfangszahn
- 19: spitzer Winkel

## Patentansprüche

1. Fräser zum Zirkularfräsen einer Gewindebohrung ins Volle ohne Vorbohren eines Kernloches
- mit um eine zentrale Aussparung (4) herum gruppierten Stirnschneiden (5) zum Erzeugen des Kernloches,
- mit an den Stirnschneidenbereich in Axialrichtung (10) anschließendem Schaftfräsbereich (9) mit Schaftschneiden (7) und mit
- an den Schaftfräsbereich (9) anschließenden, in einer zur Fräserachse (3) rechtwinklig verlaufenden Umfangsebene (11-13) positionierten Umfangszähnen (16-18) mit Umfangsschneiden (15) zum Erzeugen der Gewindegänge,
dadurch gekennzeichnet,
- daß in mehreren, vorzugsweise in drei axial um das Maß (14) der Gewindesteigung voneinander beabstandeten Umfangsebenen (11-13) i. wes. die gleiche Profilform, aber unterschiedliche Flanken- und Außendurchmesser aufweisende Umfangszähne (16-18) angeordnet sind,
--wobei in derselben Umfangsebene (11-13) liegende Umfangszähne (16-18) dasselbe Zahnprofil aufweisen, und
- daß der Flanken- und der Außendurchmesser der Umfangszähne (16,17) mit zunehmendem Axialabstand ihrer Umfangsebenen (11,12) von den Stirnschneiden (5) bis zu einer Umfangsebene (13) ansteigt, deren Umfangszähne (18) eine der Endform des Gewindes entsprechende Größe aufweisen.

2. Fräser nach Anspruch 1,
dadurch gekennzeichnet,
daß das Zahnprofil von unterschiedlichen Umfangsebenen (11-13) zugeordneten Umfangsschneiden (15) für eine jeweils unterschiedliche Zerspanungsleistung ausgelegt ist derart, daß
- die in der stirnschneidennächsten Umfangsebene (11) befindlichen Umfangszähne (16) einen vergleichsweise großen Zerspanungsquerschnitt mit vergleichsweise hohem Zerspanungsvolumen als Vorschneidezähne und
- die in den daran anschließenden Umfangsebenen (12,13) befindlichen Umfangszähne (17,18) mit zunehmendem Abstand vom Stirnende (2) einen kleineren Zerspanungsquerschnitt mit vergleichsweise kleinerem bzw. kleiner werdendem Zerspanungsvolumen
aufweisen.

3. Fräser nach Anspruch 1,
dadurch gekennzeichnet,
daß sich mit den im Schnitt stehenden Spanflächengrößen die gesamte Zerspanungsleistung (100%) wie folgt auf die Umfangszähne (16-18) der einzelnen Umfangsebenen (11-13) mit zunehmendem Abstand in Axialrichtung (10) vom Stirnende (2) verteilt: 50%:30%:20%.

4. Fräser nach einem oder mehreren der vorhergehenden Ansprüche,
gekennzeichnet durch
einen in Axialrichtung (10) sehr kurzen Schaftfräsbereich (9) zwischen der Ebene der Stirnschneiden (5) und der stirnendennächsten Umfangsebene (11) mit den stirnendennächsten Umfangszähnen (16).

5. Fräser nach einem oder mehreren der vorhergehenden Ansprüche,
gekennzeichnet durch
einen positiven Freiwinkel der Stirnschneiden (5) von etwa 4°.

6. Fräser nach einem oder mehreren der vorhergehenden Ansprüche,
gekennzeichnet durch
einen positiven Freiwinkel der Schaftschneiden (7) im Schaftfräsbereich von etwa 8°.

7. Fräser nach einem oder mehreren der vorhergehenden Ansprüche,
gekennzeichnet durch
einen radialen Freiwinkel von etwa 10° im Übergangsbereich zwischen den Stirnschneiden (5) und den Schaftschneiden (7).

8. Fräser nach einem oder mehreren der vorhergehenden Ansprüche,
gekennzeichnet durch
einen radialen Freiwinkel der Umfangsschneiden (15) in den drei Umfangsebenen (11, 12 und 13) von übereinstimmend etwa 7°.

9. Fräser nach einem oder mehreren der vorhergehenden Ansprüche,
gekennzeichnet durch
einen sich in Axialrichtung (10) zum Schaft (1) hin öffnenden spitzen Winkel zwischen den Spanflächen der Umfangsschneiden (15) bzw. der Umfangszähne (16-18) zur Fräserachse (3) oder zu einer die Fräserachse (3) enthaltenden Ebene.

## Claims

1. Milling cutter for the circular milling of a threaded hole in a solid block without predrilling a core hole
- with face cutting edges (5), grouped around a central recess (4), for the production of the core hole,
- with a shank milling region (9) adjoining the region of the face cutting edges in the axial direction (10) and having shank cutting edges (7) and with
- circumferential teeth (16-18) which adjoin the shank milling region (9), are positioned in a circumferential plane (11-13) extending at right angles to the axis (3) of the milling cutter and have circumferential cutting edges (15) for the production of the threads,
characterized in that
- circumferential teeth (16-18) with essentially the same shape in profile but with a different flank diameter and outside diameter are arranged in a plurality of, preferably three, circumferential planes (11-13) spaced apart axially by the amount (14) of the thread pitch,
-- circumferential teeth (16-18) in the same circumferential plane (11-13) having the same tooth profile, and
- the flank diameter and the outside diameter of the circumferential teeth (16, 17) increase as the axial distance of their circumferential planes (11, 12) from the face cutting edges (5) increases, up to a circumferential plane (13) whose circumferential teeth (18) are of a size corresponding to the final shape of the thread.

2. Milling cutter according to Claim 1, characterized in that the tooth profile of circumferential cutting edges (15) assigned to different circumferential planes (11-13) is designed to remove a different amount of metal in each case, such that
- the circumferential teeth (16) in the circumferential plane (11) nearest to the face cutting edges have a comparatively large cutting cross-section with a comparatively high cutting volume as roughing teeth and
- the circumferential teeth (17, 18) in the adjoining circumferential planes (12, 13) have a smaller cutting cross-section with a comparatively small or decreasing cutting volume with increasing distance from the front end (2).

3. Milling cutter according to Claim 1, characterized in that, with the sizes of the cutting faces involved in cutting, the total amount of metal removed (100%) is distributed as follows between the circumferential teeth (16-18) of the individual circumferential planes (11-13) with increasing distance from the front end (2) in the axial direction (10): 50%: 30%: 20%.

4. Milling cutter according to one or more of the preceding claims, characterized by a very short shank milling region (9) in the axial direction (10) between the plane of the face cutting edges (5) and the circumferential plane (11) nearest to the front end and having the circumferential teeth (16) nearest to the front end.

5. Milling cutter according to one or more of the preceding claims, characterized by a positive clearance angle of about 4° of the face cutting edges (5).

6. Milling cutter according to one or more of the preceding claims, characterized by a positive clearance angle of about 8° of the shank cutting edges (7) in the shank milling region.

7. Milling cutter according to one or more of the preceding claims, characterized by a radial clearance angle of about 10° in the transition- zone between the face cutting edges (5) and the shank cutting edges (7).

8. Milling cutter according to one or more of the preceding claims, characterized by a radial clearance angle of about 7° for each of the circumferential cutting edges (15) in the three circumferential planes (11, 12 and 13).

9. Milling cutter according to one or more of the preceding claims, characterized by an acute angle, opening in the axial direction (10) towards the shank (1), between the cutting faces of the circumferential cutting edges (15) or circumferential teeth (16-18) and the axis (3) of the milling cutter or a plane containing the axis (3) of the milling cutter.

## Revendications

1. Fraise pour la taille circulaire d'un perçage taraudé en pleine matière sans perçage préalable d'un avant-trou, comprenant
- des tranchants d'extrémité (5) groupés autour d'un évidement central (4) et destinés à produire l'avant-trou,
- une zone de fraisage en puits (9) située en direction axiale (10) à la suite de la région des tranchants d'extrémité, et comprenant des tranchants de fraisage en puits (7), et
- des dents périphériques (16-18) positionnées dans un plan périphérique (11-13) s'étendant à angle droit par rapport à l'axe de la fraise (3), qui sont situées à la suite de la zone de fraisage en puits (9) et comportent des tranchants périphériques (15) afin de produire les spires du taraudage,
caractérisée
- en ce qu'il est prévu des dents périphériques (16-18) agencées dans plusieurs plans périphériques (11-13) écartés axialement les uns des autres d'une distance égale au pas (14) du taraudage, de préférence dans trois plans, lesdites dents périphériques ayant sensiblement la même forme de profil mais des diamètres de flancs et des diamètres extérieurs différents,
-- les dents périphériques (16-18) situées dans le même plan périphérique (11-13) ayant le même profil,
- et en ce que le diamètre des flancs et le diamètre extérieur des dents périphériques (16, 17) augmente tandis que la distance axiale de leurs plans périphériques (11, 12) augmente depuis les tranchants d'extrémités (5) jusqu'à un plan périphérique (13) dont les dents périphériques (18) ont une taille qui correspond à la forme finale du taraudage.

2. Fraise selon la revendication 1, caractérisée en ce que le profil des tranchants périphériques associés à des plans périphériques différents (11-13) sont conçus chacun pour un travail différent d'enlèvement de matière, de telle manière que
- les dents périphériques (16) qui se trouvent dans le plan périphérique (11) le plus proche des tranchants d'extrémité comportent une section d'enlèvement de matière comparativement importante avec un volume d'enlèvement de matière comparativement élevé, en tant que dents assurant une taille préalable, et
- les dents périphériques (17, 18) qui se trouvent dans les plans périphériques (12, 13) situés à la suite, comportent une section d'enlèvement de matière qui va en diminuant tandis que la distance depuis l'extrémité (2) augmente, avec des volumes d'enlèvement de matière comparativement plus faibles, ou devenant plus faibles.

3. Fraise selon la revendication 1, caractérisée en ce que la capacité totale d'enlèvement de matière (100%) se répartit, quant à la taille de la surface des copeaux considérés en coupe, de la manière suivante sur les dents périphériques (16-18) des plans périphériques individuels (11-13), avec une distance croissante en direction axiale (10) depuis l'extremité (2): 50%:30%:20%.

4. Fraise selon l'une ou plusieurs des revendications précédentes, caractérisée en ce qu'elle présente en direction axiale (10) une zone de fraisage en puits très courte entre le plan des tranchants d'extrémités (5) et le plan périphérique (11) le plus proche de l'extrémité frontale avec les dents périphériques (16) les plus proches de l'extrémité frontale.

5. Fraise selon l'une ou plusieurs des revendications précédentes, caractérisée en ce que les tranchants d'extrémité (5) ont un angle de dépouille positif d'environ 4°.

6. Fraise selon l'une ou plusieurs des revendications précédentes, caractérisée en ce que les tranchants de fraisage en puits (7) dans la zone de fraisage en puits ont angle de dépouille positif d'environ 8°.

7. Fraise selon l'une ou plusieurs des revendications précédentes, caractérisée en ce qu'elle présente un angle de dépouille radial d'environ 10° dans la région de transition entre les tranchants d'extrémité (5) et les tranchants de fraisage en puits (7).

8. Fraise selon l'une ou plusieurs des revendications précédentes, caractérisée en ce qu'elle présente un angle de dépouille radial d'environ 7° pour les tranchants périphériques (15), en coïncidence dans les trois plans périphériques (11, 12 et 13).

9. Fraise selon l'une ou plusieurs des revendications précédentes, caractérisée en ce qu'elle présente un angle aigu ouvert en direction de l'axe (1) en direction axiale (10) entre les faces de coupe des tranchants périphériques (15), respectivement des dents périphériques (16-18), vis-à-vis de l'axe de fraisage (3), ou d'un plan qui contient l'axe de fraisage (3).
